# EUROPÄISCHE PATENTSCHRIFT

(11) **EP 0 802 093 B1**
(45) Veröffentlichungstag und Bekanntmachung des Hinweises auf die Patenterteilung: **26.04.2000**
(21) Anmeldenummer: 97102730.5
(22) Anmeldetag: 20.02.1997
(51) Int. Cl.: B60R 21/32

(54) **Sicherheitseinrichtung für ein Fahrzeug mit einem herausnehmbaren Sitz, insbesondere Beifahrersitz**
Safety device for a vehicle with a removable seat, in particular passenger seat
Dispositif de sécurité pour un véhicule comportant un siège amovible, en particulier un siège passager

(30) Priorität: 17.04.1996 DE 19615321
(43) Veröffentlichungstag der Anmeldung: 22.10.1997
(73) Patentinhaber: DaimlerChrysler AG, 70567 Stuttgart (DE)
(72) Erfinder: Holzapfel, Bernhard, 73630 Remshalden (DE); Meyer, Michael, 71063 Sindelfingen (DE); Zerrweck, Frank, 70376 Stuttgart (DE)

(56) Entgegenhaltungen:
- WO-A-95/02526
- DE-A- 4 426 677
- "COMBINED TAG ANTENNA FOR REARWARD FACING INFANT SEAT AND OCCUPANT DETECTION SENSOR" RESEARCH DISCLOSURE, Nr. 382, 1.Februar 1996, Seite 121/122 XP000553623
- DEMMPLER A: "CHILD SEAT DETECTOR" AUTOMOTIVE ENGINEERING, Bd. 104, Nr. 4, 1.April 1996, Seite 48 XP000583605
- "AIR BAG INHIBITOR FOR USE WITH INFANT SEAT" RESEARCH DISCLOSURE, Nr. 344, 1.Dezember 1992, Seite 940 XP000327165
- "PASSENGER SIDE AIR BAG DEPLOYMENT INHIBIT" RESEARCH DISCLOSURE, Nr. 358, 1.Februar 1994, Seite 64 XP000439788

## Beschreibung

Die Erfindung betrifft eine Sicherheitseinrichtung für ein Fahrzeug mit einem herausnehmbaren Sitz, insbesondere Beifahrersitz, gemäß dem Oberbegriff des Patentanspruchs 1.

Sicherheitseinrichtungen mit einer dem Sitz zugeordneten Insassen-Rückhalteeinrichtung, welche zumindest einen Airbag umfaßt und im Falle eines kritischen Unfalls in eine den Insassen schützende Rückhalteposition geht, sind wohlbekannt und werden in Fahrzeugen serienmäßig eingesetzt. Die Rückhalteeinrichtung kann mehrkomponentig ausgelegt sein und neben einem Airbag auch Sidebag (Seitenairbag) und Gurtstraffer umfassen.

Um bei nichtbelegtem Beifahrersitz eine unfallbedingte Auslösung des Beifahrer-Airbags zu verhindern, ist es auch bekannt, mittels einer in das Sitzpolster integrierten Sitzbelegungs-Erkennungseinrichtung den Sitzbelegungsstatus zu erfassen und ein entsprechendes Signal dem Auslösesteuergerät vorzugeben. Liegt dem Auslösesteuergerät ein Signal vor, welches einen unbelegten Sitz indiziert, wird jede unfallbedingte Auslösung der Rückhalteeinrichtung, alle Komponenten eingeschlossen, unterdrückt.

Aus der DE 44 09 971 C2 ist außerdem bekannt, die Sitzbelegungserkennung um eine Kindersitzerkennung zu erweitern, welche erkennt, ob ein Kindersitz, insbesondere ein rückwärtsgerichteter Kindersitz (Reboard-Sitz), den Beifahrersitz belegt. Ist dies der Fall, so ist eine Airbag-Auslösung unerwünscht, da eine optimale Schutzwirkung des Airbags nicht sichergestellt und ein Verletzungsrisiko durch den sich entfaltenden Airbag nicht ausgeschlossen werden kann. Eine Sitzbelegungserkennung mit Kindersitzerkennung gibt also ein dahingehend differenziertes Sitzbelegungs-Statussignal ab, daß unterschieden wird, ob der Sitz durch eine Person oder einen Kindersitz belegt ist. Es sind für das Sitzbelegungs-Statussignal auch weitere Differenzierungen bekannt, beispielsweise nach dem Typ des Kindersitzes oder danach, ob ein Insasse den Gurt angelegt hat oder nicht. Letzteres wird durch einen im Gurtschloß integrierten Schalter abgefragt.

Das Auslösesteuergerät kann einen ihm vorgegebenen Sitzbelegungsstatus in unterschiedlicher Weise berücksichtigen: Es können die Auslöseschwellen und der Auslösezeitpunkt beeinflußt werden, z.B. in Abhängigkeit davon, ob der Insasse angeschnallt ist oder nicht. Es kann aber auch, wie bereits erwähnt, eine Auslösung vollkommen unterdrückt werden, wenn der Sitz unbelegt oder durch einen Kindersitz belegt ist. Desweiteren kann bei einem mehrkomponentigen Rückhaltesystem, welches beispielsweise Airbag, Sidebag und Gurtstraffer umfaßt, auch eine in ihrem Umfang differenzierte Auslösung erfolgen, z.B. in der Weise, daß nur der Gurtstraffer ausgelöst wird. Dies setzt voraus, daß entsprechend diffenzierte Auslösesignale von dem Auslösesteuergerät der Rückhalteeinrichtung vorgebbar sind.

Bei Fahrzeugen mit herausnehmbaren Sitzen, insbesondere Beifahrersitzen, die so konzipiert sind, daß sie besonders einfach zu entfernen sind, um bedarfsweise Transportraum bereitzustellen, stellt sich das Problem der Kontaktierung der Sitzbelegungserkennung - einschließlich Kindersitzerkennung und Gurtschloßschalter - aber auch der Sitzheizung mit dem Fahrzeugleitungssatz. Insbesondere muß gewährleistet sein, daß bei herausgenommenem Sitz, die Rückhalteeinrichtung deaktiviert ist, damit im Falle eines Unfalls es nicht zu einer unnötigen oder gar Schaden verursachenden Auslösung kommt. Ebenso muß sichergestellt sein, daß beim Wiedereinbau des Sitzes in das Fahrzeug die Kontaktierung der Sitzbelegungserkennung in zuverlässiger Weise erfolgt. Andernfalls fände das Auslösesteuergerät bei seiner Systemüberprüfung den gleichen Zustand vor, wie ohne Sitz, so daß eine Auslösung der Rückhalteeinrichtung unterdrückt würde, auch wenn ein Insasse den Sitz belegt.

Denkbar wäre eine elektrische Steckverbindung, die beim Ein- und Ausbau des Sitzes selbsttätig durch die Relativbewegung des Sitzes kontaktiert beziehungsweise dekontaktiert. Eine Unterbringung der Steckverbindung im Bereich des Fahrzeugbodens bringt jedoch immer Verschmutzungs- und Feuchtigkeitsprobleme mit sich, insbesondere, wenn nach Entnahme des Sitzes der dann freiliegende Boden zum Transport schmutziger Güter verwendet wird, z.B. Fahrräder oder Skier.

Das Ausführungsbeispiel der Erfindung geht von einer im seitlichen Bereich des Sitzes, z.B. am Mitteldom oder B-Säule, angeordneten elektrischen Steckverbindung als Signaltrennstelle aus, mittels derer die sitzseitige Sitzbelegungs-Erkennungseinrichtung an den fahrzeugseitigen Kabelsatz anschließbar ist. Aufgrund des zu überbrückenden Verstellbereiches des Sitzes in Fahrzeuglängsrichtung muß die Kontaktierung der Steckverbindung zumindest einseitig über ein flexibles Kabel (Kabelschwanz) erfolgen. Dabei besteht die Gefahr, daß beim Wiedereinbau eines zuvor ausgebauten Sitzes die betreffende Person vergißt, die Steckverbindung vorschriftsgemäß zu kontaktieren.

Wie auch immer die Signaltrennstelle zwischen der Sitzbelegungs-Erkennungseinrichtung und dem fahrzeugseitigen Auslösesteuergerät ausgeführt ist, entstehen durch die Signaltrennstelle in Verbindung mit erleichterten Aus- und Einbaumöglichkeiten für den Sitz neue Risiken für die Zuverlässigkeit der Sicherheitseinrichtung des Fahrzeugs.

Aufgabe der Erfindung ist es daher, bei einer Sicherheitseinrichtung gemäß dem Oberbegriff des Anspruchs 1 Maßnahmen bereitzustellen, damit einerseits eine unerwünschte Auslösung der Rückhalteeinrichtung bei herausgenommenem Sitz in jedem Fall verhindert wird aber andererseits die Zuverlässigkeit des durch die Sicherheitseinrichtung gebotenen Insassenschutzes nicht durch die erleichterten Aus- und Einbaumöglichkeiten für den Sitz, insbesondere durch Unachtsamkeiten beim Wiedereinbau, beeinträchtigt wird.

Diese Aufgabe wird durch die Merkmale des Anspruchs 1 gelöst, wobei die Merkmale der Unteransprüche vorteilhafte Aus- und Weiterbildungen kennzeichnen.

Bei der erfindungsgemäßen Vorrichtung ist gegenüber dem Stand der Technik eine Sitzeinbau-Erkennungseinrichtung vorgesehen, welche den vorschriftsmäßigen Einbau des Sitzes erkennt und ein entsprechendes Sitzeinbau-Statussignal an das Auslösesteuergerät abgibt. Dieses Statussignal erlaubt dem Auslösesteuergerät unter logischer Verknüpfung mit einem weiteren Statussignal, welches die vorschriftsmäßige Signalübertragung an der Signaltrennstelle anzeigt, die tatsächliche An- oder Abwesenheit des Sitzes aber auch unterschiedliche Fehlerzustände zu erfassen und die Vorgabe des im Falle eines kritischen Unfalls abgegebenen Auslösesignals entsprechend einzustellen. Mit dieser Einstellung wird eine Auslösung der Rückhalteeinrichtung in vollem oder in einem Teilumfang unterdrückt beziehungsweise zugelassen.

Weitere Vorteile bestehen darin, daß die Auslösung der Rückhalteeinrichtung in vollem Umfang nur dann unterdrückt wird, wenn sowohl der Sitz ausgebaut als auch der Signalweg an der Signaltrennstelle unterbrochen ist. Durch die zusätzliche Abfrage des Sitzeinbaus wird die Sicherheit erhöht und werden Fehlereinflüsse reduziert.

Sollte der Sitz zwar eingebaut sein, die Signaltrennstelle aber keine Signale übertragen, so kann dieser Fehlerzustand erkannt werden, ein Mindestschutz bereitgestellt und der Fahrer gewarnt werden. Bei einer Sicherheitseinrichtung nach dem Stand der Technik, nähme das Auslösegerät einen Zustand an, bei dem eine Auslösung der Rückhalteeinrichtung vollständig unterdrückt wäre, während die Insassen hiervon keine Kenntnis hätten und auf die Schutzwirkung der Sicherheitseinrichtung vertrauen würden. Die erfindungsgemäße Sitzeinbauerkennung bildet einen Redundanzpfad, welcher eine Überprüfung der Signaltrennstelle ermöglicht.

Sollte die Signaltrennstelle zwar Signale übertragen aber die Sitzeinbauerkennung keinen Sitz melden, so kann auf einen fehlerhaften Sitzeinbau oder eine defekte Sitzeinbauerkennung geschlossen, ein entsprechender Mindestschutz bereitgestellt und der Fahrer gewarnt werden.

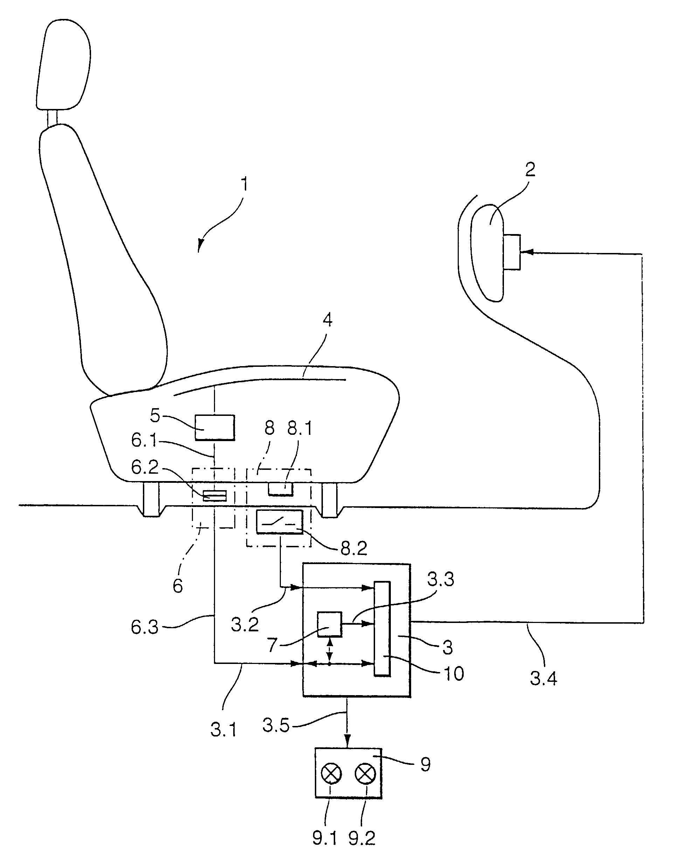

Weitere Einzelheiten und vorteilhafte Weiterbildungen der erfindungsgemäßen Sicherheitseinrichtung ergeben sich aus weiteren Unteransprüchen in Verbindung mit der folgenden Beschreibung. Ein bevorzugtes Ausführungsbeispiel der Erfindung ist in der Zeichnung dargestellt und wird nachstehend erläutert.

Die einzige Figur zeigt einen Beifahrersitz 1 und eine dem Beifahrersitz 1 zugeordneten Rückhalteeinrichtung, die durch einen Airbag 2 gebildet ist, im allgemeinen jedoch weitere Komponenten wie Gurtstraffer oder Sidebag umfassen kann. In an sich bekannter Weise wird der Airbag 2 von einem Auslösesteuergerät 3 angesteuert, welches bei einem kritischen Unfall ein Auslösesignal 3.4 an den Airbag 2 gibt. Weiterhin ist in an sich bekannter Weise ein Sitzbelegungssensor 4 vorgesehen, welcher von einer sitzseitigen Auswerteelektronik 5 ausgewertet wird und mit dieser eine Sitzbelegungs-Erkennungseinrichtung 4, 5 bildet.

In der einfachsten Ausgestaltung erkennt die Sitzbelegungs-Erkennungeinrichtung 4, 5 lediglich, ob der Sitz 1 belegt ist (oder nicht) und gibt ein entsprechendes Sitzbelegungs-Statussignal 3.1 dem Auslösesteuergerät 3 vor. In weiterer Ausgestaltung kann jedoch eine differenziertere Erkennung vorgesehen sein, bei der unterschieden wird, ob ein den Sitz 1 belegender Insasse den Gurt angelegt hat (oder nicht) oder ob der Sitz 1 durch einen Kindersitz belegt ist, bei dem eine Auslösung des Airbags 2 unbedingt unterdrückt werden muß. Ein entsprechend diffenziertes Sitzbelegungs-Statussignal 3.1 wird dem Auslösesteuergerät 3 vorgegeben.

Das Sitzbelegungs-Statussignal 3.1 wird dem Auslösesteuergerät 3 über einen Signalweg vorgegeben, der über die Signaltrennstelle 6 geführt ist. Die Signaltrennstelle 6 muß einerseits die beim Ausbau des Sitzes zwingend erforderliche Trennung der sitzseitigen Signalleitung 6.1 von der fahrzeugseitigen Signalleitung 6.3 ermöglichen und andererseits bei eingebautem Sitz eine zuverlässige Signalübertragung gewährleisten. Im einfachsten Fall wird die Signaltrennstelle 6 durch eine Steckverbindung 6.2 gebildet, welche manuell zu lösen und zu koppeln ist.

Desweiteren ist eine in dem Auslösesteuergerät 3 integrierte Trennstellenabfrage 7 vorgesehen, welche die Übertragungsfähigkeit zumindest der Signaltrennstelle 6 überprüft und ein entsprechendes Trennstellen-Statussignal 3.3 abgibt. Eine Überprüfung des gesamten Signalweges 6, 6.1, 6.3 oder von Teilabschnitten davon, welche die Signaltrennstelle 6 einschließen, ist auch denkbar. Wenn die Signaltrennstelle 6 durch eine elektrischen Steckverbindung 6.2 ausgeführt ist, wird die vorschriftsmäßige Kopplung der Steckverbindung 6.2 abgefragt. Dies kann mittels einer elektrischen Durchgangsprüfung des Signalweges 6.1, 6.2, 6.3 erfolgen, indem ein für den Abschluß der Signalleitung 6 mit der sitzseitigen Auswerteelektronik 5 charakteristischer Zustand erfaßt wird, beispielsweise ein bestimmter ohmscher Abschlußwiderstand. Dieser kann auch in die sitzseitige beziehungsweise fahrzeugseitige Hälfte der Steckverbindung 6.2 verlegt sein, um den Ort der Erfassung auf die Steckverbindung 6.2 zu konzentrieren.

Desweiteren ist eine Sitzeinbau-Erkennungseinrichtung 8 vorgesehen, welche den vorschriftsmäßigen Einbau des Sitzes 1 erkennt und ein entsprechendes Sitzeinbau-Statussignal 3.2 an das Auslösesteuergerät 3 abgibt. Die Sitzeinbau-Erkennungseinrichtung 8 ist vorzugsweise als Endlagenschalter realisiert, welcher erst dann gegen ein definiertes Potential betätigt und geschaltet wird, wenn beim Einbau des Sitzes 1 derselbige oder ein mechanisches Sitz-Verriegelungsteil eine vorgeschriebene Endlage erreicht. Letzteres hat den Vorteil, daß erst wenn der Sitz 1 nicht nur eingebaut sondern auch verriegelt ist, der Sitz als eingebaut erkannt wird. Der Schalter kann als mechanischer Schalter ausgeführt sein, der beim Einbau durch eine Relativbewegung des Sitzes oder des Verriegelungsteiles betätigt wird. Alternativ kann, wie in der Figur dargestellt, der Schalter durch einen im Bodenbereich des Fahrzeugs angeordneten Reed-Kontakt 8.2 gebildet sein, der durch einen am herausnehmbaren Sitz angeordneten Dauermagneten 8.1 betätigt wird. Je nachdem welche Endlage erfaßt werden soll, ist der Dauermagnet am Sitzgestell oder an einem Verriegelungsteil angeordnet. Ein Reed-Kontakt hat den Vorteil, daß durch die Einkapselung des Kontaktes eine Funktionsbeeinträchtigung durch Schmutz oder Feuchtigkeit ausgeschlossen ist. Beim Einsatz spezieller Reed-Kontakte, die über den Schluß der magnetischen Feldlinien durch ein Metallteil geschaltet werden, kann der Dauermagnet 8.1 am herausnehmbaren Sitz 1 entfallen.

Desweiteren ist eine von dem Auslösesteuergerät 3 mit Warnsignalen 3.5 angesteuerte Warneinrichtung 9 vorgesehen, welche den Fahrer des Fahrzeugs über Fehlerzustände der Sicherheitseinrichtung informiert. Die Warnung kann akustisch, z.B über Sprachausgabe, oder optisch durch Warnleuchten in der Anzeigentafel des Fahrzeugs ausgegeben werden. Bei dem Ausführungsbeispiel sind zwei Warnleuchten 9.1, 9.2 vorgesehen, die im normalen, fehlerfreien Betrieb nichtleuchtend geschaltet sind.

Das Auslösesteuergerät 3 verwertet die Statussignale 3.1, 3.2, 3.3 zur Sitzbelegung, zum Sitzeinbau und zur Trennstelle in der Weise, daß sie den Umfang, in welchem eine Auslösung der Rückhalteeinrichtung zugelassen wird, zumindest mitbestimmen. Der Auslöseumfang wird dabei den durch die Statussignale 3.1, 3.2, 3.3 charakterisierten Bedingungen angepaßt. Dies geschieht wie folgt: Eine erste Auslöseentscheidung trifft das Auslösesteuergerät 3 in bekannter Weise unter Berücksichtigung aufgenommener Beschleunigungswerte, wobei hier der Sitzbelegungsstatus, insbesondere das Ergebnis einer Gurtschloßabfrage, z.B. durch eine Beeinflussung von Auslöseschwellen eingehen kann. Parallel wird laufend in der Logikeinheit 10 in Abhängigkeit der Statussignale 3.1, 3.2, 3.3 entschieden, in welchem Umfang eine Auslösung der Rückhalteeinrichtung zugelassen wird. So kann die Auslösung der Rückhalteeinrichtung im gesamten Umfang oder nur in Teilumfängen, insbesondere Gurtstraffer und Sidebag unter Ausschluß des frontalen Airbags 2, zugelassen sein. Der letzgenannte Auslösungumfang ist mit einer Sitzbelegung durch einen Kindersitz verträglich und kann für diese Sitzbelegung zugelassen werden. Im einzelnen entscheidet die Logikeinheit 10 wie folgt:

Wenn das Sitzeinbau-Statussignal 3.2 einen vorschriftsgemäßen Einbau indiziert und zugleich das Trennstellen-Statussignal 3.3 eine übertragungsfähige Signaltrennstelle 6 indiziert, wird eine Auslösung gemäß dem vorliegenden Sitzbelegungs-Statussignal 3.1 zugelassen, wie bisher. Dieser Zustand entspricht dem Normalzustand bei vorschriftsmäßig eingebautem Sitz. Dabei ist es vorteilhaft, wenn auf einen reduzierten, durch eine Sitzbelegung mit einem Kindersitz bedingten Auslöseumfang mittels eines Dauerleuchtens der zweiten Warnleuchte 9.2 hingewiesen wird.

Wenn das Sitzeinbau-Statussignal 3.2 einen nicht vorschriftsgemäßen Einbau indiziert und zugleich das Trennstellen-Statussignal 3.3 eine nicht übertragungsfähige Signaltrennstelle indiziert, wird keine Auslösung zugelassen. Dieser Zustand entspricht dem Normalzustand mit ausgebautem Sitz, es ergeht daher kein Warnsignal.

Wenn das Sitzeinbau-Statussignal 3.2 einen nicht vorschriftsgemäßen Einbau indiziert und zugleich das Trennstellen-Statussignal 3.3 eine übertragungsfähige Signaltrennstelle 6 indiziert, wird eine Auslösung gemäß dem vorliegenden Sitzbelegungs-Statussignal 3.1 zugelassen. Dies entspricht einem Fehlerzustand, bei dem entweder der Sitz 1 fehlerhaft eingebaut wurde oder die Sitzeinbau-Erkennungseinrichtung 8 defekt ist. In diesem Fall gibt das Auslösesteuergerät 3 ein Warnsignal 3.5 aus, durch das der Fahrer auf einen Fehler hingewiesen wird. Im Ausführungsbeispiel erfolgt die Warnung durch ein Dauerleuchten der ersten Warnleuchte 9.1.

Wenn das Sitzeinbau-Statussignal 3.2 einen vorschriftsgemäßen Einbau indiziert und zugleich das Trennstellen-Statussignal 3.3 eine nicht übertragungsfähige Signaltrennstelle 6 indiziert, wird die Auslösung der Rückhalteeinrichtung allenfalls in einem Teilumfang zugelassen. Bei diesem Fehlerszustand ist der Sitz 1 zwar vorschriftsgemäß eingebaut, die Signaltrennstelle 6 jedoch defekt, beispielsweise weil die elektrische Steckverbindung 6.2 nicht vorschriftsgemäß gekoppelt wurde. Dem Auslösegerät 3 liegt daher keine zuverlässige Information über den Sitzbelegungsstatus vor. Der in diesem Fall zugelassene Auslöseumfang sollte mit einer Sitzbelegung durch einen Kindersitz verträglich sein und kann daher dem für diesen Sitzbelegungsstatus zugelassen Auslöseumfang entsprechen. Da ein durch das Auslösesteuergerät 3 erkannter Fehler vorliegt, kann ein entsprechendes Warnsignal 3.5 an den Fahrer abgegeben werden, welches diesen darauf hinweist, daß ein Fehler vorliegt und die Rückhalteeinrichtung nur einen Mindestschutz - wenn überhaupt - bietet. Die Warnung kann in der Weise erfolgen, daß die zweite Warnleuchte 9.2 intermittierend aufleuchtet. Damit wird einerseits auf einen reduzierten Auslöseumfang und andererseits auf eine Fehler hingewiesen.

Alternativ ist bei dem zuletzt behandelten Fehlerzustand auch denkbar, anstelle des reduzierten Auslösumfanges eine uneingeschränkte Auslösung der Rückhalteeinrichtung zuzulassen, um einem den Sitz möglicherweise belegenden Insassen einen Vollschutz zu gewähren. Diese Wahl würde aber einer möglichen Sitzbelegung durch einen Kindersitz nicht gerecht.

Weitere Ausgestaltungen insbesondere hinsichtlich der Realisierung der Signaltrennstelle 6 und der Sitzeinbau-Erkennungseinrichtung 8 sind denkbar. Vorteile bietet die Anwendung der Transponder-Technik, wie sie z.B. in der eingangs genannten DE 44 09 971 C2 beschrieben und zur Kindersitzerkennung eingesetzt wird. So kann die Signaltrennstelle 6 durch eine induktive Übertragungsstrecke zur drahtlosen Übertragung der Sitzbelegungs-Statussignale 3.1 gebildet werden und die sitzseitige Sitzbelegungs-Erkennungseinrichtung 4, 5 mit Transponder-Technik gespeist und abgefragt werden. Die Trennstellenabfrage 7 kann dann in der Weise erfolgen, daß das Zustandekommen eines Daten-Dialogs überprüft wird. Diese Ausgestaltung der Signaltrennstelle 6 hat den Vorteil, daß der Signalweg automatisch bei vorschriftsgemäß eingebauten Sitz geschlossen wird, so daß eine fehlerträchtige Handhabung durch eine Bedienperson nicht erforderlich ist. Dies nimmt jedoch nicht dem mit der Sitzeinbau-Erkennungseinrichtung 8 gebildeten Redundanzpfad die Vorteilhaftigkeit, da auch mit der Transponder-Technik Fehlerquellen, insbesondere aufgrund des erhöhten elektronischen technischen Aufwandes nicht ausgeschlossen werden können.

In Kombination oder unabhängig davon kann auch bei der Sitzeinbauerkennung 8 eine Transponder-Technik eingesetzt werden, indem beispielsweise der Dauermagnet 8.1 durch einen Transponder und der Reed-Kontakt 8.2 durch eine Sende- und Empfangseinheit mit Antenne ersetzt wird. Dies hätte den Vorteil, daß ein Fehlbetätigung des Schalters beim Transport von Geräten mit starken Magnetfeldern, z.B. Lautsprechern, ausgeschlossen wäre.

## Patentansprüche

1. Sicherheitseinrichtung für ein Fahrzeug mit einem herausnehmbaren Sitz (1), insbesondere Beifahrersitz,
- mit einer dem vom Fahrzeugboden herausnehmbaren Sitz (1) zugeordneten Insassen-Rückhalteeinrichtung (2), welche zumindest einen Airbag umfaßt und im Falle eines kritischen Unfalls durch ein Auslösesignal eines Auslösesteuergerätes (3) auslösbar ist, so daß die Rückhalteeinrichtung (2) in eine den Insassen schützende Rückhalteposition geht,
- mit einer sitzseitig angeordneten Sitzbelegungs-Erkennungseinrichtung, welche verschiedene Sitzbelegungen, insbesondere durch eine Person oder einen Kindersitz, erkennt und ein entsprechendes Sitzbelegungs-Statussignal (3.1) über eine Signaltrennstelle (6) dem fahrzeugseitig angeordneten Auslösesteuergerät (3) vorgibt, welches den Sitzbelegungsstatus bei der Vorgabe des Auslösesignals berücksichtigt, insbesondere um den Umfang einer Auslösung der Rückhalteeinrichtung (2) festzulegen,
**dadurch gekennzeichnet,**
- daß eine Sitzeinbau-Erkennungseinrichtung (8) vorgesehen ist, welche den vorschriftsmäßigen Einbau des Sitzes (1) erkennt und ein entsprechendes Sitzeinbau-Statussignal (3.2) abgibt,
- daß eine Trennstellenabfrage (7) vorgesehen ist, welche die Übertragungsfähigkeit zumindest der Signaltrennstelle (6) überprüft und ein entsprechendes Trennstellen-Statussignal (3.3) abgibt, und
- daß das Auslösesteuergerät (3) die Statussignale zur Sitzbelegung (3.1), zur Trennstelle (3.3) und zum Sitzeinbau (3.2) im Auslösesteuergerät (3) in der Weise berücksichtigt, daß der Umfang der Auslösung der Rückhalteinrichtung (2) den durch die Statussignale (3.1, 3.2, 3.3) charakterisierten Bedingungen angepaßt ist.

2. Sicherheitseinrichtung für ein Fahrzeug mit einem herausnehmbaren Sitz nach Anspruch 1,
**dadurch gekennzeichnet,**
daß wenn das Sitzeinbau-Statussignal (3.2) einen vorschriftsgemäßen Einbau indiziert und zugleich das Trennstellen-Statussignal (3.3) eine übertragungsfähige Signaltrennstelle (6) indiziert, die Rückhalteeinrichtung (2) in einem Umfang auslösbar ist, welcher dem vorliegenden Sitzbelegungs-Statussignal (3.1) entspricht.

3. Sicherheitseinrichtung für ein Fahrzeug mit einem herausnehmbaren Sitz nach Anspruch 1,
**dadurch gekennzeichnet,**
daß wenn das Sitzeinbau-Statussignal (3.2) einen nicht vorschriftsgemäßen Einbau indiziert und zugleich das Trennstellen-Statussignal (3.3) eine nicht übertragungsfähige Signaltrennstelle (6) indiziert, eine Auslösung der Rückhalteeinrichtung (2) in vollem Umfang unterdrückt ist.

4. Sicherheitseinrichtung für ein Fahrzeug mit einem herausnehmbaren Sitz nach Anspruch 1,
**dadurch gekennzeichnet,**
daß wenn das Sitzeinbau-Statussignal (3.2) einen nicht vorschriftsgemäßen Einbau indiziert und zugleich das Trennstellen-Statussignal (3.3) eine übertragungsfähige Signaltrennstelle (6) indiziert, die Rückhalteeinrichtung (2) gemäß dem vorliegenden Sitzbelegungs-Statussignal (3.1) auslösbar ist.

5. Sicherheitseinrichtung für ein Fahrzeug mit einem herausnehmbaren Sitz nach Anspruch 4,
**dadurch gekennzeichnet,**
daß wenn das Sitzeinbau-Statussignal (3.2) einen nicht vorschriftsgemäßen Einbau indiziert und zugleich das Trennstellen-Statussignal (3.3) eine übertragungsfähige Signaltrennstelle (6) indiziert, ein Warnsignal (3.5) ausgegeben wird, durch das der Fahrer auf einen Fehler hingewiesen wird.

6. Sicherheitseinrichtung für ein Fahrzeug mit einem herausnehmbaren Sitz nach Anspruch 1,
**dadurch gekennzeichnet,**
daß wenn das Sitzeinbau-Statussignal (3.2) einen vorschriftsgemäßen Einbau indiziert und zugleich das Trennstellen-Statussignal (3.3) eine nicht übertragungsfähige Signaltrennstelle (6) indiziert, die Rückhalteeinrichtung (2) in einem Teilumfang oder gar nicht auslösbar ist.

7. Sicherheitseinrichtung für ein Fahrzeug mit einem herausnehmbaren Sitz nach Anspruch 6,
**dadurch gekennzeichnet,**
daß der Teilumfang dem Umfang der Auslösung bei einem Sitzbelegungsstatus entspricht, der eine Sitzbelegung mit einem Kindersitz anzeigt.

8. Sicherheitseinrichtung für ein Fahrzeug mit einem herausnehmbaren Sitz nach Anspruch 6, 7,
**dadurch gekennzeichnet,**
daß wenn das Sitzeinbau-Statussignal (3.2) einen vorschriftsgemäßen Einbau indiziert und zugleich das Trennstellen-Statussignal (3.3) eine nicht übertragungsfähige Signaltrennstelle (6) indiziert, ein Warnsignal (3.5) ausgegeben wird, welches den Fahrer darauf hinweist, daß ein Fehler vorliegt und die Rückhalteeinrichtung (2) höchstens einen mit einer Sitzbelegung durch einen Kindersitz verträglichen Mindestschutz bietet.

9. Sicherheitseinrichtung für ein Fahrzeug mit einem herausnehmbaren Sitz nach Anspruch 1,
**dadurch gekennzeichnet,**
daß wenn das Sitzeinbau-Statussignal (3.2) einen vorschriftsgemäßen Einbau indiziert und zugleich das Trennstellen-Statussignal (3.3) eine nicht übertragungsfähige Signaltrennstelle (6) indiziert, die Rückhalteeinrichtung (2) in einem Umfang auslösbar ist, welcher einer Sitzbelegung durch eine Person entspricht.

10. Sicherheitseinrichtung für ein Fahrzeug mit einem herausnehmbaren Sitz nach Anspruch 1,
**dadurch gekennzeichnet,**
daß die Signaltrennstelle (6) durch eine elektrische Steckverbindung (6.2) gebildet ist.

11. Sicherheitseinrichtung für ein Fahrzeug mit einem herausnehmbaren Sitz nach Anspruch 1,
**dadurch gekennzeichnet,**
daß die Signaltrennstelle (6) durch eine drahtlose, insbesondere induktive Übertragungstrecke gebildet ist.

12. Sicherheitseinrichtung für ein Fahrzeug mit einem herausnehmbaren Sitz nach Anspruch 1,
**dadurch gekennzeichnet,**
daß die Sitzeinbau-Erkennungseinrichtung (8) durch einen einen Endlagenschalter, insbesondere einen Reed-Kontakt (8.2) gebildet ist, welcher betätigt wird und geschaltet wird, wenn beim Einbau des Sitzes (1) derselbige oder ein Sitz-Verriegelungsteil eine vorgeschriebene Endlage erreicht.

13. Sicherheitseinrichtung für ein Fahrzeug mit einem herausnehmbaren Sitz nach Anspruch 1,
**dadurch gekennzeichnet,**
daß die Sitzeinbau-Erkennungseinrichtung (8) mittels einer Transponder-Strecke gebildet ist.

14. Sicherheitseinrichtung für ein Fahrzeug mit einem herausnehmbaren Sitz nach Anspruch 5,
**dadurch gekennzeichnet,**
daß eine Warneinrichtung (9) mit mindestens einer Warnleuchte (9.1) vorgesehen ist, welche im normalen, fehlerfreien Betrieb nichtleuchtend geschaltet ist und bei Ansteuerung durch das Warnsignal (3.5), durch das der Fahrer auf einen Fehler hingewiesen wird, in ein Dauerleuchten übergeht.

15. Sicherheitseinrichtung für ein Fahrzeug mit einem herausnehmbaren Sitz nach Anspruch 2,
**dadurch gekennzeichnet,**
daß eine Warneinrichtung (9) mit einer zweiten Warnleuchte (9.2) vorgesehen ist, welche bei vorschriftsmäßig eingebautem Sitz (1) und übertragungsfähiger Signaltrennstelle (6) durch ein Dauerleuchten auf einen reduzierten, durch eine Sitzbelegung mit einem Kindersitz bedingten Auslöseumfang hinweist.

16. Sicherheitseinrichtung für ein Fahrzeug mit einem herausnehmbaren Sitz nach Anspruch 8 und 15,
**dadurch gekennzeichnet,**
daß die Warneinrichtung (9) von dem Warnsignal (3.5) in der Weise ansteuerbar ist, daß wenn die Rückhalteeinrichtung (2) bei vorschriftsmäßig eingebautem Sitz (1) aber nicht übertragungsfähiger Trennstelle (6) nur einen einer Sitzbelegung durch einen Kindersitz entsprechenden Mindestschutz bietet, die Warnleuchte (9.2) intermittierend aufleuchtet.

## Claims

1. A safety device for a motor vehicle having a removable seat (1), in particular a passenger seat,
- having a passenger restraining device (2) cooperating with the seat (1) which can be removed from the vehicle floor, comprising at least one airbag which can be released by a trip signal of a release control device (3) in the event of a critical accident, so that the restraining device (2) is moved into a restraining position protecting the passenger,
- having a seat occupancy detection system arranged on the seat side which detects different statuses of seat occupancy, in particular by a person or a child seat, and applies a corresponding seat occupancy status signal (3.1) via a signal break point (6) to the release control device (3) arranged on the vehicle side, which takes account of the seat occupancy status when pre-setting the trip signal, in particular to set the degree to which the restraining device (2) will be released,
**characterised in that**
- a seat mounting detection device (8) is provided, which detects whether the seat (1) has been mounted to specification and issues a corresponding seat mounting status signal (3.2),
- a break point scanner (7) is provided, which tests the transmission capability at least of the signal break point (6) and issues a corresponding break point status signal (3.3), and
- the release control device (3) takes account of the status signals pertaining to seat occupancy (3.1), the break point (3.3) and the seat mounting (3.2) in such a way that the degree to which the restraining device (2) is released is adjusted to the conditions characterised by the status signals (3.1, 3.2, 3.3).

2. A safety device for a motor vehicle having a removable seat as claimed in claim 1,
**characterised in that**
if the seat mounting status signal (3.2) indicates mounting as per specification and the break point status signal (3.3) simultaneously indicates a signal break point (6) capable of transmission, the restraining device (2) will be released to a degree corresponding to the seat occupancy status signal (3.1) indicated.

3. A safety device for a motor vehicle having a removable seat as claimed in claim 1,
**characterised in that**
if the seat mounting status signal (3.2) indicates mounting that is not to specification and the break point status signal (3.3) simultaneously indicates a signal break point (6) that is not capable of transmission, full release of the restraining device (2) will be suppressed.

4. A safety device for a motor vehicle having a removable seat as claimed in claim 1,
**characterised in that**
if the seat mounting status signal (3.2) indicates mounting that is not to specification and the break point status signal (3.3) simultaneously indicates a signal break point (6) that is not capable of transmission, the restraining device (2) can be released in accordance with the seat occupancy status signal (3.1) indicated.

5. A safety device for a motor vehicle having a removable seat as claimed in claim 4,
**characterised in that**
if the seat mounting status signal (3.2) indicates mounting that is not to specification and the break point status signal (3.3) simultaneously indicates a signal break point (6) that is capable of transmission, a warning signal (3.5) is issued, by means of which the driver is alerted to a fault.

6. A safety device for a motor vehicle having a removable seat as claimed in claim 1,
**characterised in that**
if the seat mounting status signal (3.2) indicates mounting as per specification and the break point status signal (3.3) simultaneously indicates a signal break point (6) that is not capable of transmission, the restraining device (2) can be released to a certain extent or not at all.

7. A safety device for a motor vehicle having a removable seat as claimed in claim 6,
**characterised in that**
the partial degree corresponds to the degree of release for a seat occupancy status indicated when the seat is occupied by a child seat.

8. A safety device for a motor vehicle with a removable seat as claimed in claim 6, 7,
**characterised in that**
if the seat mounting status signal (3.2) indicates mounting as per specification and the break point status signal (3.3) simultaneously indicates a signal break point (6) that is not capable of transmission, a warning signal (3.5) is issued which alerts the driver to the fact that there is a fault and the restraining device (2) will offer at most minimal protection compatible with occupancy of the seat by a child seat.

9. A safety device for a motor vehicle having a removable seat as claimed in claim 1,
**characterised in that**
if the seat mounting status signal (3.2) indicates mounting per specification and the break point status signal (3.3) simultaneously indicates a signal break point (6) that is not capable of transmission, the restraining device (2) can be released to a degree corresponding to occupancy of the seat by a person.

10. A safety device for a motor vehicle having a removable seat as claimed in claim 1,
**characterised in that**
the signal break point (6) may be provided as an electric plug-and-socket connection (6.2).

11. A safety device for a motor vehicle having a removable seat as claimed in claim 1,
**characterised in that**
the signal break point (6) may be provided as a wireless, in particular inductive, transmission channel.

12. A safety device for a motor vehicle having a removable seat as claimed in claim 1,
**characterised in that**
the seat mounting detection device (8) is an end-position switch, in particular a reed contact (8.2), which is operated and switched when, on mounting the seat (1), the latter or a seat locking component reaches a predetermined end-position.

13. A safety device for a motor vehicle having a removable seat as claimed in claim 1,
**characterised in that**
the seat mounting detection device (8) is provided as a transponder channel.

14. A safety device for a motor vehicle having a removable seat as claimed in claim 5,
**characterised in that**
a warning device (9) with at least one warning lamp (9.1) is provided, which is switched so as to be non-illuminated during normal, fault-free operation and switches to continuous illumination in response to a warning signal (3.5) alerting the driver to a fault.

15. A safety device for a motor vehicle having a removable seat as claimed in claim 2,
**characterised in that**
a warning device (9) with a second warning lamp (9.2) is provided, which is illuminated continuously if the seat (1) is mounted per specification and the signal break point (6) is incapable of transmission to warn that release has been reduced due to a seat occupancy status conditioned by a child seat.

16. A safety device for a motor vehicle having a removable seat as claimed in claim 8 and 15,
**characterised in that**
the warning device (9) can respond to the warning signal (3.5) so that if the seat (1) is mounted per specification but the break point (6) is not capable of transmission, the warning lamp (9.2) will be illuminated intermittently to warn that the restraining device (2) will provide only a minimum protection corresponding to seat occupancy by a child seat.

## Revendications

1. Dispositif de sécurité pour un véhicule comportant un siège amovible (1), en particulier le siège du passager avant,
- avec un dispositif (2), de retenue de l'occupant qui est associé au siège (1) amovible du plancher du véhicule, qui comprend au moins un coussin gonflable et qui, en cas d'accident critique, peut être déclenché par un signal de déclenchement d'un appareil de commande de déclenchement (3), de sorte que le dispositif de retenue (2) passe dans une position de retenue qui protège l'occupant,
- avec un dispositif de reconnaissance d'occupation du siège qui est disposé du côté du siège, reconnaît différentes occupations du siège, en particulier par une personne ou par un siège d'enfant et envoie à l'appareil de commande de déclenchement (3) disposé du côté du véhicule, en passant par un point (6) de sectionnement du signal, un signal (3.1) de statut d'occupation du siège qui, lors de l'envoi du signal de déclenchement, tient compte du statut d'occupation du siège, en particulier pour déterminer l'extension d'un déclenchement du dispositif de retenue (2),
caractérisé,
par le fait qu'est prévu un dispositif (8) de reconnaissance de repose du siège qui reconnaît la repose réglementaire du siège (1) et émet un signal correspondant (3.2) de statut de repose du siège,
qu'est prévu une interrogation (7) du point de sectionnement qui vérifie la capacité de transmission d'au moins le point (6) de sectionnement du signal et émet un signal correspondant (3.3) de statut du point de sectionnement, et
que l'appareil de commande de déclenchement (3) tient compte des signaux de statut concernant l'occupation du siège (3.1), le point de sectionnement (3.3) et la repose du siège (3.2.) envoyés dans l'appareil de commande de déclenchement (3) de façon que l'extension du déclenchement du dispositif de retenue (2) s'adapte aux conditions caractérisées par les signaux de statut (3.1, 3.2., 3.3).

2. Dispositif de sécurité pour un véhicule comportant un siège amovible selon la revendication 1,
caractérisé par le fait
que si le signal (3.2) de statut de repose du siège indique une repose réglementaire et qu'en même temps le signal (3) de statut du point de sectionnement indique un point (6) de sectionnement du signal capable de transmettre, le dispositif de retenue (2) peut se déclencher en une extension qui correspond au signal présent (3.1) de statut d'occupation du siège.

3. Dispositif de sécurité pour un véhicule comportant un siège amovible selon la revendication 1,
caractérisé par le fait que,
que si le signal (3.2) de statut de repose du siège indique une repose non réglementaire et qu'en même temps, le signal (3.3) de statut du point de sectionnement indique un point (6) de sectionnement du signal incapable de transmettre, un déclenchement du dispositif de retenue (2) est supprimé dans toute son extension.

4. Dispositif de sécurité pour un véhicule comportant un siège amovible selon la revendication 1,
caractérisé par le fait
que si le signal (3.2) de statut de repose du siège indique une repose non réglementaire et qu'en même temps, le signal (3.3) de statut du point de sectionnement indique un point (6) de sectionnement du signal capable de transmettre, le dispositif de retenue (2) peut se déclencher en fonction du signal présent (3.1) de statut d'occupation du siège.

5. Dispositif de sécurité pour un véhicule, comportant un siège amovible selon la revendication 4,
caractérisé par le fait
que si le signal (3.2) de statut de repose du siège indique une repose non réglementaire et qu'en même temps, le signal (3.3) de statut du point de sectionnement indique un point (6) de sectionnement du signal capable de transmettre, est émis un signal d'alerte par lequel le conducteur est alerté sur un défaut.

6. Dispositif de sécurité pour un véhicule, comportant un siège amovible selon la revendication 1,
caractérisé par le fait
que si le signal (3.2) de statut de repose du siège indique une repose réglementaire et qu'en même temps, le signal (3.3) de statut du point de sectionnement indique un point (6) de sectionnement du signal incapable de transmettre, le dispositif de retenue (2) ne peut se déclencher qu'en extension partielle ou pas du tout.

7. Dispositif de sécurité pour un véhicule, comportant un siège amovible selon la revendication 6,
caractérisé par le fait
que l'extension partielle correspond à l'extension du déclenchement dans le cas d'un statut d'occupation du siège qui indique une occupation du siège par un siège d'enfant.

8. Dispositif de sécurité pour un véhicule, comportant un siège amovible selon la revendication 6, 7,
caractérisé par le fait
que si le signal (3.2) de statut de repose du siège indique une repose réglementaire et qu'en même temps, le signal (3.3) de statut du point de sectionnement indique un point (6) de sectionnement du signal incapable de transmettre, est émis un signal d'alerte (3.5) qui alerte le conducteur sur le fait qu'il y a un défaut et que le dispositif de retenue (2) offre au maximum une protection minimale compatible avec occupation du siège par un siège d'enfant.

9. Dispositif de sécurité pour un véhicule, comportant un siège amovible selon la revendication 1
caractérisé par le fait
que si le signal (3.2) de statut de repose du siège indique une repose réglementaire et qu'en même temps, le signal (3.3) de statut du point de sectionnement indique un point (6) de sectionnement du signal incapable de transmettre, le dispositif de retenue (2) peut se déclencher en une extension qui correspond a une occupation du siège par une personne.

10. Dispositif de sécurité pour un véhicule comportant un siège amovible selon la revendication 1,
caractérisé par le fait
que le point (6) de sectionnement du signal est formé par une liaison électrique enfichable (6.2).

11. Dispositif de sécurité pour un véhicule comportant un siège amovible selon la revendication 1,
caractérisé par le fait
que le point (6) de sectionnement du signal est formé par une ligne de transmission sans conducteur, en particulier inductive.

12. Dispositif de sécurité pour un véhicule comportant un siège amovible selon la revendication 1,
caractérisé par le fait
que le dispositif (8) de reconnaissance de repose du siège est formé par un commutateur de position finale, en particulier un contact à tiges (8.2) qui est manoeuvré et commute lorsque, lors de la repose du siège (1), celui-ci, ou une pièce de verrouillage du siège, atteint une position finale prescrite.

13. Dispositif de sécurité pour un véhicule comportant un siège amovible selon la revendication 1,
caractérisé par le fait
que le dispositif (8) de reconnaissance de repose du siège est formé par une ligne de transpondeur.

14. Dispositif de sécurité pour un véhicule comportant un siège amovible selon la revendication 5,
caractérisé par le fait
qu'est prévu un dispositif d'alerte (9) comportant au moins une lampe-témoin (9.1) qui, en exploitation normale, sans défaut, n'est pas allumée et, en cas de commande par le signal d'alerte (3.5) qui alerte le conducteur sur un défaut, passe en allumage permanent.

15. Dispositif de sécurité pour un véhicule comportant un siège amovible selon la revendication 2,
caractérisé par le fait
qu'est prévu un dispositif d'alerte (9) comportant une seconde lampe-témoin (9.2) qui, dans le cas d'un siège (1) reposé réglementairement et d'un point (6) de sectionnement du signal capable de transmettre, attire l'attention, par un allumage permanent, sur une extension réduite de déclenchement, imposée par une occupation du siège par un siège d'enfant.

16. Dispositif de sécurité pour un véhicule comportant un siège amovible selon les revendications 8 et 15,
caractérisé par le fait
que le dispositif d'alerte (9) peut être commandé par le signal d'alerte (3.5) de la façon que, dans le cas d'un siège (1) reposé réglementairement mais d'un point (6) de sectionnement incapable de transmettre, le dispositif de retenue (2) n'offre qu'une protection minimale correspondant à une occupation du siège par un siège d'enfant, qui allume la lampe-témoin (9.2) par intermittence.
